# EUROPÄISCHE PATENTSCHRIFT

(11) **EP 0 435 976 B1**
(45) Veröffentlichungstag und Bekanntmachung des Hinweises auf die Patenterteilung: **07.01.1993**
(21) Anmeldenummer: 90909335.3
(22) Anmeldetag: 29.06.1990
(51) Int. Cl.: F02D 41/10, B60K 41/02

(54) **VERFAHREN ZUR STEUERUNG DER KRAFTSTOFFMENGE VON BRENNKRAFTMASCHINEN**
PROCESS FOR METERING FUEL IN INTERNAL COMBUSTION ENGINES
PROCEDE POUR LA COMMANDE DU DEBIT DE CARBURANT DE MOTEURS A COMBUSTION INTERNE

(30) Priorität: 20.07.1989 DE 3924077
(43) Veröffentlichungstag der Anmeldung: 10.07.1991
(73) Patentinhaber: ROBERT BOSCH GMBH, 70442 Stuttgart (DE)
(72) Erfinder: EISELE, Hermann, D-7143 Vaihingen/Enz (DE)
(86) Internationale Anmeldenummer: DE9000489
(87) Internationale Veröffentlichungsnummer: WO9101441

(56) Entgegenhaltungen:
- US-A- 3 645 366
- Patent Abstracts of Japan, vol. 4, No: 147 (M-036) 16 October 1980, & JP, A, 55 100453
- Patent Abstracts of Japan, vol. 11, No. 221 (M-608) 17 July 1987, & JP, A, 62 037239
- Patent Abstracts of Japan, vol. 9, No: 242 (M-417) 28 September 1985 6 JP, A, 60 094830
- Patent Abstracts of Japan, vol. 11, No: 111 (M-578) 8 April 1987, & JP, A, 61 257332

## Beschreibung

### Stand der Technik

Das Drehmoment, das eine Brennkraftmaschine abgibt, wird wesentlich durch die Kraftstoffmenge bestimmt, die zur Verbrennung pro Verbrennungsvorgang zur Verfügung gestellt wird. Der Kraftstoff kann zu diesem Zweck direkt in den Brennraum zugemessen werden, wie dies bei selbstzündenden Brennkraftmaschinen (Dieselmotoren) der Fall ist oder über ein Kraftstoff-Luftgemisch zur Verfügung gestellt werden, das fremdgezündet wird, wie beim Ottomotor bekannt. In der Folge werden beide Fälle mit dem Begriff Kraftstoffdosierung oder Kraftstoffmenge angesprochen.

Die Erfindung geht von einem Verfahren nach der Gattung des Patentanspruchs 1 aus. Ein solches Verfahren ist z. B. durch die DE-AS 12 56 944 bekannt. Dort wird mit Hilfe eines Drehmomentfühlers festgestellt, ob sich bei einer Erhöhung des Kraftstoffanteils der Füllung der Brennräume der Brennkraftmaschine bei gegebenem Luftanteil das abgegebene Drehmoment weiter erhöht oder abfällt. Fällt das Drehmoment ab, so wird über einen Regler der Kraftstoffanteil auf einen Höchstwert begrenzt. Ein solches Verfahren wird als Leistungsoptimierung bezeichnet.

Es ist weiterhin bekannt, daß bei Brennkraftmaschinen, die sowohl fremdgezündete Brennkraftmaschinen als auch selbstzündende Brennkraftmaschinen (Diesel) sein können, beim Einsatz in Personenkraftfahrzeugen zwischen einem Schwungrad und dem Getriebe des Kraftfahrzeugs ein sogenannter Vordämpfer angebracht ist. Dieser soll bewirken, daß im Leerlauf der Brennkraftmaschine, sofern diese einen ungleichförmigen Lauf in diesem Betriebsbereich aufweist, kein Getrieberasseln auftritt. Ein solcher Vordämpfer weist einen Mitnehmer auf, der z. B. auf dem brennkraftmaschinenseitigen Teil der zum Getriebe führenden Antriebswelle sitzt. Der Mitnehmer befindet sich dabei zwischen Anschlägen, die an dem Schwungrad angeordnet sind, das auf dem getriebeseitigen Teil der Antriebswelle sitzt. Die Anordnung kann auch umgekehrt erfolgen mit dem Schwungrad auf dem brennkraftmaschinenseitigen Teil der Antriebswelle. Zwischen dem Mitnehmer und den Anschlägen sind in und entgegen der Drehrichtung einfedernde, weiche Federn angeordnet, die bestrebt sind, den Mitnehmer in eine Zwischenstellung zwischen den Anschlägen zu halten und die Antriebsdrehzahlschwankungen, die von der Brennkraftmaschine auf das Getriebe übertragen werden könnten, aufzufangen.

Nur im Leerlauf werden die Drehgeschwindigkeitsschwankungen der Brennkraftmaschine durch die Federn aufgefangen. Bei Lastaufnahme, d. h. bei steigendem, von der Brennkraftmaschine abzugebendem Drehmoment, werden dagegen die sehr weich ausgebildeten Federn schnell überdrückt und es kommt der Mitnehmer ruckartig in Anlage an die Anschläge des Schwungrads, da der Mitnehmer beschleunigt wird, bevor das erhöhte Drehmoment wirksam auf die Getriebeseite übertragen werden kann. Die Federn sind in diesem Fall als Übertragungsglied zu weich. Härtere Federn andererseits könnten den gewünschten Ausgleich der schwankenden Antriebsdrehzahl im Leerlauf nicht herstellen. Ab Anlage des Mitnehmers an den Anschlägen besteht eine formschlüssige Kupplung in Drehrichtung zum Getriebe und zur Abtriebsseite am Kraftfahrzeug. Bei modernen Kraftfahrzeugen werden die Brennkraftmaschinen zur Geräuschminderung sehr weich in der Karosserie aufgehängt. Sie bilden damit mit dem Fahrzeug ein schwingfähiges Gebilde. Durch das ruckartige Anlegen der Mitnehmer an die Anschläge des Schwungrads, kommt es hier zu einer unangenehmen Ruckelschwingung im Fahrzeug, die unter Umständen noch, je nach Charakteristik der Brennkraftmaschine, der Aufhängung und der Fahrzeugeigenschaften, sich aufschaukeln kann.

### Vorteile der Erfindung

Durch das erfindungsgemäße Verfahren gemäß Patentanspruch 1 wird mit Hilfe des Erfassens der Annäherung der Kupplungsteile, Mitnehmer und Schwungrad, aneinander erreicht, daß eine bestimmte Annäherungsgeschwindigkeit nicht überschritten wird und deshalb ein weicher Übergang zwischen niedriger und hoher Last beim Gasgeben erzielt wird. Damit werden speziell die eingangs genannten Nachteile vermieden. Dieses Verfahren kann auch bei Brennkraftmaschinen angewendet werden, die mit einem Getriebe versehen, zum Beispiel stationären Antriebszwecken mit wechselndem Leistungsbedarf dienen.

Durch die Unteransprüche werden vorteilhafte Weiterbildungen der Erfindung angegeben.

### Zeichnung

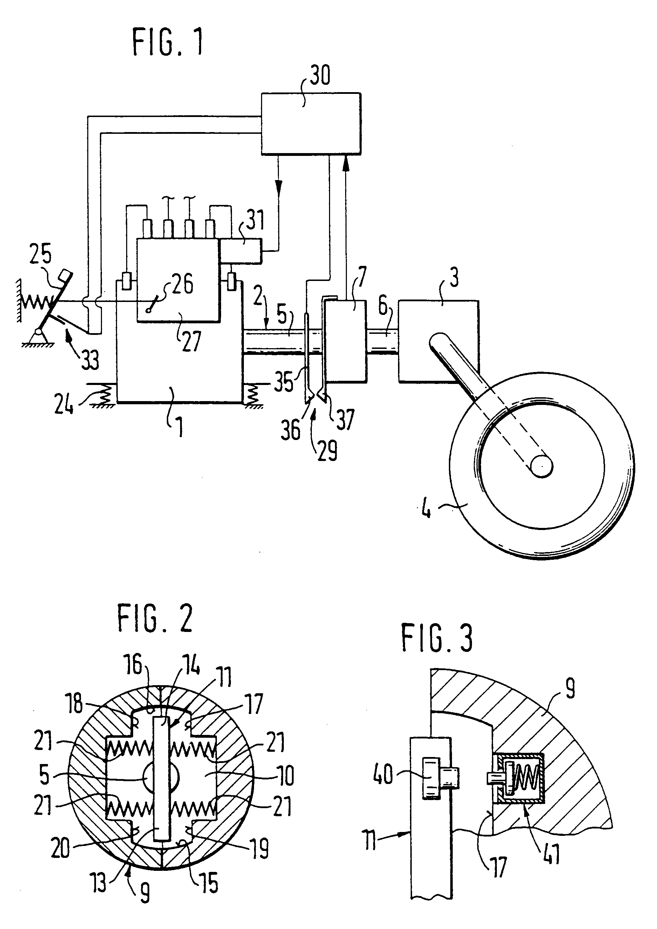

Ein Ausführungsbeispiel der Erfindung ist in der Zeichnung dargestellt und wird in der nachfolgenden Beschreibung näher erläutert. Es zeigen Figur 1 eine schematische Darstellung des Antriebsstranges eines Kraftfahrzeuges, Figur 2 einen Schnitt durch eine in einem Schwungrad auf der Antriebswelle zwischen Brennkraftmaschine und Getriebe des Kraftfahrzeuges integrierte Kupplung und Figur 3 einen Teilausschnitt aus der Kupplung gemäß Figur 2 mit einem schematisch dargestellten Näherungssensor.

### Beschreibung

In sehr vereinfachter Darstellung ist in Figur 1 eine Brennkraftmaschine 1 gezeigt, die über eine Antriebswelle 2 mit einem Getriebe 3 eines Kraftfahrzeugs verbunden ist. Das Getriebe 3 treibt ein Fahrwerk, von dem lediglich ein Fahrzeugrad 4 dargestellt ist. Die Antriebswelle ist zweiteilig ausgeführt mit einem brennkraftmaschinenseitigen Antriebswellenteil 5 und einem getriebeseitigen Antriebswellenteil 6, die beide über eine als Vordämpfer ausgebildete Kupplung 7 miteinander gekuppelt sind. Der Vordämpfer bzw. die Kupplung ist in Figur 2 im Schnitt ebenfalls schematisch dargestellt und besteht im wesentlichen aus einem Schwungrad 9 mit einer mittleren Ausnehmung 10, in die ein kuppelnder Mitnehmer 11 als einer der Kupplungsteile hineinragt, der mit dem von der Brennkraftmaschine 1 kommenden Antriebswellenteil 5 verbunden ist. Der andere Kupplungsteil der Kupplung 7 besteht aus dem Schwungrad. Der Mitnehmer 11 weist gemäß Figur 2 zwei diametral von der Antriebswelle 5 abstehende Mitnehmerarme 13 und 14 auf, die in zwei einander gegenüberliegende Taschen 15 und 16 der Ausnehmung 10 hineinragen. Die Taschen werden durch einander in Umfangsrichtung des Schwungrads 9 gegenüberliegende Anschlagflächen 17, 18, 19 und 20 begrenzt, an die die Arme 13 bzw. 14 des Mitnehmers 11 bei deren Relativverdrehung zum Schwungrad 9 zur Anlage kommen und so eine formschlüssige Kupplung mit dem Schwungrad 9 eingehen. Im Ruhezustand, d. h. bei fehlender Last auf der Getriebeseite, werden die Arme 13, 14 von den Anschlägen 17 bis 20 durch Druckfedern 21 distanziert. Dies gilt besonders auch für den Leerlaufbetrieb, in dem das Getrieberasseln vermieden werden soll. Wird ein Drehmoment von der Antriebswelle 5 auf den Antriebswellenteil 6 entgegen einem entsprechenden Fahrwiderstand übertragen, so verdreht sich der Mitnehmer gegen die Kraft der Druckfedern 21 bis zur Anlage an den Anschlägen 17 bis 20. Nur bei einem sehr kleinen zu übertragenden Drehmoment, wie es im Leerlaufbetrieb aufgebracht werden muß, können die Druckfedern 21 eine Ungleichförmigkeit der Antriebsdrehbewegung von der Brennkraftmaschine her ausgleichen, so daß im Getriebe 3 die Kraftstoffübertragungsteile in formschlüssiger Anlage zueinander bleiben und ein Getrieberasseln unterbunden wird. Tritt jedoch mit Lastaufnahme ein großer Drehmomentsprung auf, so werden die Druckfedern 21 schnell überdrückt und es kommen die Arme 13, 14 sehr schnell zur Anlage an die Anschläge des Schwungrads 9. Dies führt zu dem beschriebenen Ruck, so daß Brennkraftmaschine 1 in ihrer Aufhängung 24 ins Schwingen kommt. Diese Auswirkung macht sich besonders nachteilig bemerkbar, wenn das Kraftfahrzeug aus dem Schubbetrieb beschleunigt werden soll, da hier der Drehwinkel, über den der Mitnehmer gegenüber dem Schwungrad beschleunigt werden kann, noch größer ist als bei Lastaufnahme aus dem Leerlaufbetrieb. Bei einem in der Karosserie festgesetzten Gaspedal kann es durch die Relativbewegung der Brennkraftmaschine zum Gaspedal zusätzlich zu einem Adern der Einstellung, zum Beispiel eines Mengenverstellhebels 26 einer die Brennkraftmaschine versorgenden Kraftstoffeinspritzpumpe 27 kommen, wodurch das Laufverhalten von Brennkraftmaschine und Kraftfahrzeug noch weiter verschlechtert wird. Auch der Fahrer des Kraftfahrzeugs als schwingfähiges Gebilde kann hier negative Einflüsse durch unbewußte Betätigung des Gaspedals ausüben. Im Ausführungsbeispiel nach Figur 1 ist eine Kraftstoffeinspritzpumpe schematisch dargestellt, dabei ist zu beachten ist, daß statt von einer Einspritzpumpe die Brennkraftmaschine auch von einer Saugrohrkraftstoffeinspritzanlage oder von einem Vergaser mit Kraftstoff versorgt werden kann, je nach Art des Brennverfahrens.

Um nun die ruckbehaftete Kraftübertragung auf das Getriebe zu vermeiden, ist in Ausgestaltung der Erfindung zwischen dem Mitnehmer 11 und dem Schwungrad ein Näherungssensor 29 angeordnet, der die Relativverdrehung zwischen Mitnehmer 11 und dem Schwungrad 9 bzw. den Grad der Annäherung der Arme 13, 14 des Mitnehmers 11 an die Anschläge 17 bis 20, insbesondere die Annäherungsgschwindigkeit erfaßt und an eine Steuereinrichtung 30 weitergeleitet. Diese nimmt Einfluß auf die Kraftstoffzumessung z. B. der Kraftstoffeinspritzpumpe 27, was dort mit Hilfe eines Vollastanschlags 31 bekannter Art erfolgen kann. Dabei wird elektromagnetisch oder elektrohydraulisch die Höchstmenge des zur Einspritzung kommenden Kraftstoffs pro Verbrennungsvorgang und so das von der Brennkraftmaschine abgebbare minimale Drehmoment im Beschleunigungsfalle begrenzt.

Der Eingriff kann aber auch in anderer Weise erfolgen, wie z. B. über eine Maßnahme in der Verstellwegübertragung zwischen Gaspedal und Reglereingriff auf das Mengenverstellorgan der Kraftstoffeinspritzpumpe. Das kann z. B. im Bereich des Verstellhebels sein, der die Einstellung der Reglerfeder eines mechanischen Reglers der Kraftstoffeinspritzpumpe bestimmt oder bei Verwendung einer elektronischen Betätigung des Verstellhebels im Bereich der elektrischen Ansteuerung dieser Betätigung. Genauso ist der Eingriff auch über die elektrische Steuerung bei einer elektrisch gesteuerten Einspritzpumpe möglich.

Die Steuereinrichtung 30 erhält weiterhin in bekannter Weise über das Gaspedal 25 mit Hilfe eines Gaspedalstellungssensors 33 Steuersignale für den vom Fahrer eingegebenen Drehmomentwunsch bzw. Drehmomentänderungswunsch. Entsprechend diesem und in Abhängigkeit von eventuell anderen Betriebsparametern der Brennkraftmaschine wird dann von der Steuereinrichtung in an sich bekannter Weise die Kraftstoffeinspritzmenge entweder begrenzt oder unmittelbar gesteuert. In diesem Falle entfallen die mechanische Bewegungsübertragung zwischen Gaspedal und dem außen an der Kraftstoffeinspritzpumpe vorgesehenen Mengenverstellhebel 26 oder entsprechende Einrichtungen bei Gemischerzeugern, wie z. B. Vergasern für fremdgezündete Brennkraftmaschinen.

Um eine ruckhafte Kraftübertragung auf das Getriebe und somit Ruckelschwingungen und Getrieberasseln bei Drehmomenterhöhung zu vermeiden, darf die Differenzgeschwindigkeit der Kupplungsteile zueinander im Moment von deren Aufeinandertreffen einen bestimmten Höchstwert nicht überschreiten. Die zulässige Differenzgeschwindigkeit hängt von der Drehzahl, der Trägheit der zu verbindenden Teile, der Lagerung der Brennkraftmaschine und der Art der Kraftstoffmengenregelung bzw. -steuerung sowie sonstigen sich auf die Schwingungserregbarkeit des Verbundes Fahrer, Fahrzeug und Brennkraftmaschine auswirkenden Parametern ab. Sollwerte können gemessen und in Kennfeldern vorgegeben werden. Sind dann die Kupplungsteile in Anlage zueinander gekommen, kann das Drehmoment unbeschränkt in üblicher Weise gesteigert werden, z. B. auch auf den bereits anfangs der Drehmomenterhöhung gewünschten Wert.

Wird also vom Fahrer eine Drehmomentänderung von der Brennkraftmaschine abverlangt, entsprechend erfaßt durch die Betätigung des Gaspedals 25, kommt es zunächst zu einer Vergrößerung der Kraftstoffmenge pro Verbrennungsvorgang und damit zur Drehzahlerhöhung. Zugleich wird die Annäherung des Mitnehmers 11 an die Anschläge des Schwungrads 9 überprüft und bei einer Überschreitung einer bestimmten Annäherungsgeschwindigkeit oder bestimmten eines Annäherungsgrades die Leistungsabgabe durch Steuerung der Kraftstoffmenge pro Verbrennungsvorgang so begrenzt, daß es zu einem weichen Anlegen des Mitnehmer an die Anschläge kommt, eine minimal zulässige Annäherungsgeschwindikgeit des Mitnehmers in Richtung Anschläge nicht überschritten wird und so zum Ruckeln anregende Kraftübertragungsvorgänge vermieden werden.

Die stabile Anlage der Arme an den Anschlägen 17 bis 20 wird ebenfalls vom Näherungssensor erfaßt und von da an die Kraftstoffmenge in der sonst üblichen Weise erhöht entsprechend dem eingegebenen Drehmomentwunsch bzw. der Last.

Die Steuereinrichtung kann so ausgebildet sein, daß sie bei einem festgestellten Abstand des Mitnehmers in Drehrichtung zu den Anschlägen die Kraftstoffmengenzunahme auf einen festgelegten Geringstwert begrenzt, der darauf abgestimmt ist, daß ein quasi ruckfreies Anlegen des Mitnehmers mit minimal zulässiger Differenzgeschwindigkeit ermöglicht wird. Ab dieser Anlage des Mitnehmers an den Anschlägen wird die Begrenzung der Kraftstoffmengenzunahme aufgehoben und die jeweils geforderte Kraftstoffmenge eingestellt. Die Steuereinrichtung kann aber auch einen gegenüber dem obigen noch geringeren Wert oder auch einen höheren Wert der Kraftstoffmenge pro Verbrennungsvorgang einstellen und diesen mit gemessener, zunehmender Annäherung oder Annäherungsgeschwindigkeit des Mitnehmers an die Anschläge so zu ändern, daß das Anlegen des Mitnehmers noch in zulässiger Weise ruckarm erfolgt. Dabei wird die gemessene Annäherung oder der Annäherungsgrad mit einem vorgegebenen Sollwert verglichen und entsprechend dem Vergleichsergebnis die Kraftstoffmenge begrenzt zur Einhaltung des Sollwertes bzw. Erzielung des ruckarmen Anliegens. Schließlich läßt sich auch eine grundsätzliche annäherungsanaloge oder der Annäherungsgeschwindigkeit analoge Steuerung der Kraftstoffmenge verwirklichen. Dies kann als Regelvorgang in bekannter Weise durchgeführt werden.

Je nach Ausstattung und Betriebszustand von Kraftfahrzeug und Brennkraftmaschine hat der Ruck andere Auswirkungen. Dementsprechend kann der Sollwert in Abhängigkeit von Betriebsparametern der Brennkraftmaschine und/oder des Kraftfahrzeugs gesteuert werden. Dabei können gemessene Werte in einem Kennfeld abgespeichert werden und in einer oder mehreren Abhängigkeiten abgefragt werden. So kann der Sollwert in Abhängigkeit von der momentanen Drehzahl, der Fahrgeschwindigkeit, der Last oder dem Näherungsgrad der Kupplungsteile zueinander, deren tatsächliche Annäherungsgeschwindigkeit bzw. Differenzgeschwindigkeit oder schließlich von der auf die momentane Drehzahl bezogene Differenzgeschwindigkeit verändert werden, um ein optimales Anlegen der Kupplungsteile aneinander zur Vermeidung schädlicher Schwingungen und des Ruckelns gesteuert werden.

Der in Figur 1 gezeigte Annäherungssensor besteht aus einem mit der brennkraftmaschinenseitigen Antriebswelle 5 verbundenen Scheibe 35, die einen oder mehrere Zähne 36 aufweist, die gegenüber entsprechend am Schwungrad 9 vorgesehenen Zähnen 37 angeordnet sind. Durch die Steuereinrichtung wird dann die Relativdrehstellung der Zähne 36, 37 zueinander erfaßt bzw. deren Relativbewegung zueinander. Eine solche Erfassung ist für sich bekannt und braucht hier nicht näher beschrieben werden. Der in Figur 1 dargestellte Sensor 29 entspricht dabei einem Winkelmeßverfahren. Ein solches kann z. B. in bekannter Weise auch durch zwei mit Stirnverzahnungen versehenen Zahnrädern, von denen das eine auf der brennkraftseitigen Antriebswelle 5 und das andere an dem Schwungrad sitzt, verwirklicht werden. Die Verzahnung dieser relativ zu einander verdrehbaren Zahnräder wird jeweils über ortsfeste Sensoren abgefragt und daraus der relative Verdrehwinkel ermittelt. In Figur 3 ist eine Alternativlösung eines Näherungsgebers gezeigt mit einem mit dem Mitnehmer 11 verbundenen Senderteil 40 und einem mit dem Schwungrad 9 verbundenen Empfängerteil 41, der zudem noch nachgiebig verstellbar sein kann, um bei Kontakt des Mitnehmers 11 mit dem Anschlag 17 am Schwungrad 9 diesen Tatbestand durch Steuerkontakte zu erfassen und entsprechend die Begrenzung der Zunahmerate der Kraftstoffmenge aufzuheben. Dabei werden Maßtoleranzen ausgeglichen. Als Sensor kommt hier z. B. ein Hall-Effektsensor oder ein Ultraschallnäherungssensor in Frage. Es sind auch Möglichkeiten gegeben, kapazitive Sensoren oder andere Wegmeßverfahren anzuwenden.

## Patentansprüche

1. Verfahren zur Steuerung der in den Brennräumen einer insbesondere zum Antrieb von Kraftfahrzeugen dienenden Brennkraftmaschine pro Verbrennungsvorgang zur Verbrennung gebrachten Kraftstoffmenge mit Erfassung eines Signal eines eine Verdrehung des brennkraftmaschinenseitigen Teils (5) einer von der Brennkraftmaschine abführenden Antriebswelle gegenüber einem abtriebsseitigen Teil (6) dieser Antriebswelle erfassenden Gebers als Steuersignal zur Beeinflussung der Kraftstoffmenge, dadurch gekennzeichnet, daß der Geber als Näherungssensor (29) ausgebildet ist, der die Annäherung eines ersten Kupplungsteils (11) auf einem ersten Teil (5) einer zweiteiligen Antriebswelle (2) der Brennkraftmaschine an einen zweiten Kupplungsteil (9) auf einem zweiten Teil (6) der Antriebswelle (2) zwischen Brennkraftmaschine und einem nachgeschalteten Getriebe erfaßt, wobei die Kupplungsteile entgegen einer Rückstellkraft (21) bis zur gegenseitigen formschlüssigen Anlage aneinander verstellbar sind und bei vorhandenem bestand zwischen beiden Kupplungsteilen die Kraftstoffmenge oder die Kraftstoffmengenzunahme derart gesteuert wird, daß eine vorgegebene Differenzgeschwindigkeit beim zur Anlagekommen der Kupplungsteile nicht überschritten wird und diese Steuerung der Kraftstoffmenge nach Anlage der Kupplungsteile aneinander aufgehoben und die Kraftstoffmenge nach anderen Betriebsparametern der Brennkraftmaschine gesteuert wird.

2. Verfahren nach Anspruch 1, dadurch gekennzeichnet, daß der bestand der Kupplungsteile zueinander bei Lastaufnahme gemessen wird und bei vorhandendem bestand die Kraftstoffmenge auf einen niedrigen Höchstwert begrenzt wird.

3. Verfahren nach Anspruch 1, dadurch gekennzeichnet, daß bei Lastaufnahme gemessen wird, ob ein Abstand der Kupplungsteile zueinander vorhanden ist und die Annäherung oder Annäherungsgeschwindigkeit der Kupplungsteile zueinander gemessen wird, mit einem vorgegebenen Sollwert verglichen wird und entsprechend dem Vergleichsergebnis die Kraftstoffmenge eingestellt wird zur Einhaltung des Sollwerts.

4. Verfahren nach Anspruch 1, dadurch gekennzeichnet, daß bei Lastaufnahme gemessen wird, ob ein Abstand der Kupplungsteile zueinander vorhanden ist und bei Vorliegen eines Abstandes die Kraftstoffmenge auf einen bestimmten Wert begrenzt wird, der mit zunehmender Annäherung der Kupplungsteile zueinander erhöht oder gesenkt wird, entsprechend dem Vergleichsergebnis der momentanen Annäherung oder Annäherungsgeschwindigkeit mit einem Sollwert.

5. Verfahren nach einem der vorstehenden Ansprüche 2 bis 4, dadurch gekennzeichnet, daß der Sollwert in Abhängigkeit von Betriebsparametern der Brennkraftmaschine und/oder des Kraftfahrzeugs änderbar ist.

6. Verfahren nach einem der Ansprüche 2 bis 4, dadurch gekennzeichnet, daß der Sollwert in Abhängigkeit von der Drehzahl der Brennkraftmaschine und/oder des Fahrgeschwindigkeit des Kraftfahrzeugs änderbar ist.

7. Verfahren nach einem der Ansprüche 2 bis 4, dadurch gekennzeichnet, daß der Sollwert in Abhängigkeit vom Annäherungsgrad der Kupplungsteile zueinander änderbar ist.

8. Verfahren nach Anspruch 2 bis 4, dadurch gekennzeichnet, daß der Sollwert in Abhängigkeit von der auf die momentane Drehzahl der Brennkraftmaschine bezogene Annäherungsgechwindigkeit änderbar ist.

9. Verfahren nach einem der Ansprüche 2 bis 4, dadurch gekennzeichnet, daß der Sollwert in Abhängigkeit von der Last änderbar ist.

10. Verfahren nach einem der Ansprüche 2 bis 4, dadurch gekennzeichnet, daß der Sollwert in Abhängigkeit von der Annäherungsgeschwindigkeit der Kupplungsteile zueinander änderbar ist.

## Claims

1. Process for controlling the fuel quantity brought to combustion in each combustion operation in the combustion spaces of an internal-combustion engine, serving especially for driving motor vehicles, by the detection of a signal from an indicator, detecting a rotation of the part (5), located on the same side as the internal-combustion engine, of a drive shaft leading from the internal-combustion engine in relation to a part (6) of this drive shaft located on the output side, as a control signal for influencing the fuel quantity, characterised in that the indicator is designed as a proximity sensor (29) which detects the approximation of a first coupling part (11) on a first part (5) of a two-part drive shaft (2) of the internal-combustion engine to a second coupling part (9) on a second part (6) of the drive shaft (2) between the internal-combustion engine and a following transmission, the coupling parts being adjustable counter to a restoring force (21) until they come to bear positively against one another, and, when there is a spacing between the two coupling parts, the fuel quantity or the increase in fuel quantity being controlled in such a way that a predetermined differential speed is not exceed during the coming to bear of the coupling parts, this control of the fuel quantity is cancelled after the coupling parts have come to bear against one another, and the fuel quantity is controlled according to other operating parameters of the internal-combustion engine.

2. Process according to Claim 1, characterised in that the spacing of the coupling parts from one another is measured during a load take-up and, when a spacing is present, the fuel quantity is limited to a low maximum value.

3. Process according to Claim 1, characterised in that, during a load take-up, a measurement is made as to whether a spacing of the coupling parts from one another is present, and the approximation or approximation speed of the coupling parts to one another is measured and compared with a predetermined desired value, and the fuel quantity is set according to the comparison result in order to maintain the desired value.

4. Process according to Claim 1, characterised in that, during a load take-up, a measurement is made as to whether a spacing of the coupling parts from one another is present, and if a spacing is present the fuel quantity is limited to a specific value which is increased or decreased with an increased approximation of the coupling parts to one another according to the result of a comparison of the instantaneous approximation or approximation speed with a desired value.

5. Process according to one of the preceding Claims 2 to 4, characterised in that the desired value can be changed as a function of operating parameters of the internal-combustion engine and/or of the motor vehicle.

6. Process according to one of Claims 2 to 4, characterised in that the desired value can be changed as a function of the rotational speed of the internal-combustion engine and/or of the running speed of the motor vehicle.

7. Process according to one of Claims 2 to 4, characterised in that the desired value can be changed as a function of the degree of approximation of the coupling parts to one another.

8. Process according to Claims 2 to 4, characterised in that the desired value can be changed as a function of the approximation speed related to the instantaneous rotational speed of internal-combustion engine.

9. Process according to one of Claims 2 to 4, characterised in that the desired value can be changed as a function of the load.

10. Process according to one of Claims 2 to 4, characterised in that the desired value can be changed as a function of the approximation speed of the coupling parts to one another.

## Revendications

1. Procédé pour le dosage du carburant mis dans les chambres à combustion d'un moteur à combustion interne, servant en particulier à l'entraînement de véhicules à moteur, par cycle de combustion avec détection d'un signal d'un détecteur détectant une rotation de la pièce (5), située du côté du moteur à combustion interne, d'un arbre de transmission partant du moteur à combustion interne par rapport à une pièce (6) située du côté de la sortie de cet arbre de transmission en tant que siqnal de commande pour agir sur le débit de carburant, procédé caractérisé en ce que le détecteur est constitué comme un détecteur de proximité (29), qui détecte le rapprochement d'une première pièce d'accouplement (11) d'une première pièce (5) sur un arbre de transmission (2) en deux parties du moteur à combustion interne d'avec une deuxième pièce d'accouplement (9) sur une deuxième partie (6) de l'arbre de transmission (2) entre le moteur à combustion interne et une boîte de vitesses montée à la suite, les pièces d'accouplement étant réglables à l'encontre de la force de ressorts (21) jusqu'à ce qu'elles viennent en appui l'une contre l'autre par engagement positif et le débit de carburant ou l'augmentation du débit de carburant étant commandé lorsqu'il existe une certaine distance entre les deux pièces d'accouplement, de telle sorte que ne soit pas dépassée une vitesse différentielle prédéfinie lors de la venue en appui des pièces d'accouplement et que cette commande du débit du carburant soit supprimée une fois que les pièces d'accouplement sont venues en appui l'une contre l'autre et que le débit de carburant soit commandé par d'autres paramètres de fonctionnement du moteur à combustion interne.

2. procédé selon la revendication 1, caractérisé en ce que la distance entre les pièces d'accouplement est mesurée quand il y a un appel de charge et le débit de carburant est limité à une valeur maximale basse quand il existe un écartement.

3. Procédé selon la revendication 1, caractérisé en ce que l'on mesure, quand il y a un appel de charge s'il existe un écartement entre les pièces d'accouplement et l'on mesure le rapprochement ou la vitesse de rapprochement des pièces d'accouplement l'une par rapport à l'autre, on compare à une valeur de consigne prédéfinie et on règle le bébit de carburant en fonction du résultat de la comparaison pour maintenir la valeur de consigne.

4. Procédé selon la revendication 1, caractérisé en ce que, quand il y a un appel de charge, on mesure s'il existe un écartement entre les pièces d'accouplement et quand il existe un écartement on limite le débit de carburant à une valeur déterminée, qui augmente ou diminue avec un rapprochement croissant des pièces d'accouplement l'une par rapport à l'autre, en fonction du résultat de la comparaison du rapprochement instantané ou de la vitesse de rapprochement avec une valeur de consigne.

5. Procédé selon l'une des revendications précédentes 2 à 4, caractérisé en ce que la valeur de consigne peut être modifiée en fonction des paramètres de fonctionnement du moteur à combustion interne et/ou du véhicule à moteur.

6. Procédé selon l'une des revendications 2 à 4, caractérisé en ce que la valeur de consigne peut être modifiée en fonction de la vitesse de rotation du moteur à combustion interne et/ou de la vitesse de marche du véhicule à moteur.

7. Procédé selon l'une des revendications 2 à 4, caractérisé en ce que la valeur de consigne peut être modifiée en fonction du degré de rapprochement des pièces d'accouplement l'une par rapport l'autre.

8. Procédé selon les revendications 2 à 4, caractérisé en ce que la valeur de consigne peut être modifiée en fonction de la vitesse de rapprochement par rapport à la vitesse de rotation instantanée du moteur à combustion interne.

9. Procédé selon l'une des revendications 2 à 4, caractérisé en ce que la valeur de consigne peut être modifiée en fonction de la charge.

10. Procédé selon l'une des revendications 2 à 4, caractérisé en ce que la valeur de consigne peut être modifiée en fonction de la vitesse de rapprochement des pièces d'accouplement.
